# EUROPÄISCHE PATENTSCHRIFT

(11) **EP 1 381 572 B1**
(45) Veröffentlichungstag und Bekanntmachung des Hinweises auf die Patenterteilung: **17.12.2008**
(21) Anmeldenummer: 02735274.9
(22) Anmeldetag: 19.04.2002
(51) Int. Cl.: C02F 3/10, B01J 19/32, C02F 3/04

(54) **VERFAHREN UND VORRICHTUNG ZUR BEHANDLUNG VON FLÜSSIGKEITEN, INSBESONDERE ZUM KLÄREN VON ABWASSER**
METHOD AND DEVICE FOR THE TREATMENT OF FLUIDS IN PARTICULAR FOR EFFLUENT PURIFICATION
PROCEDE ET DISPOSITIF DE TRAITEMENT DE LIQUIDES, EN PARTICULIER D'EPURATION D'EAUX USEES

(30) Priorität: 19.04.2001 DE 10119299
(43) Veröffentlichungstag der Anmeldung: 21.01.2004
(73) Patentinhaber: NORDDEUTSCHE SEEKABELWERKE GMBH & CO. KG, 26954 Nordenham (DE)
(72) Erfinder: BITTNER, Hans-Jürgen, 26954 Nordenham (DE); ZERRER, Hartmut, 71069 Sindelfingen (DE)
(74) Vertreter: Möller, Friedrich
(86) Internationale Anmeldenummer: PCT/EP2002/004340
(87) Internationale Veröffentlichungsnummer: WO 2002/085797

(56) Entgegenhaltungen:
- EP-A- 1 088 793
- DE-A- 3 534 163
- DE-A- 19 512 965
- US-A- 4 274 966
- PATENT ABSTRACTS OF JAPAN vol. 017, no. 158 (C-1041), 29. März 1993 (1993-03-29) -& JP 04 322794 A (NIPPON KENTETSU CO LTD), 12. November 1992 (1992-11-12)
- PATENT ABSTRACTS OF JAPAN vol. 2000, no. 20, 10. Juli 2001 (2001-07-10) -& JP 2001 070978 A (SHIN MEIWA IND CO LTD), 21. März 2001 (2001-03-21)

## Beschreibung

Die Erfindung betrifft ein Verfahren zur Behandlung von Flüssigkeiten, insbesondere zum Klären von Abwasser, gemäß dem Oberbegriff des Anspruchs 1. Weiterhin betrifft die Erfindung eine Vorrichtung zur Behandlung von Flüssigkeiten, insbesondere zum Klären von Abwasser, gemäß dem Oberbegriff des Anspruchs 9.

Es ist bekannt, Abwasser sowohl mechanisch als auch biologisch zu klären. Eine abschließende Klärung des Abwassers findet dabei auch dann, wenn die Vorklärung biologisch erfolgt, mechanisch statt. Dazu dienen runde oder eckige Nachklärbecken, die üblicherweise mindestens einen sich langsam durch die Flüssigkeit bewegenden Räumer aufweisen.

Die ständige Zunahme des Abwassers führt dazu, dass bestehende Kläranlagen stetig erweitert werden müssen. Solche Erweiterungen sind bei bekannten Kläranlagen nur begrenzt möglich. Wenn alle Erweiterungsmöglichkeiten ausgeschöpft sind, ist ein Neubau erforderlich.

In der US-A-4 274 966 ist das Problem der ständigen Zunahme von Abwässern erwähnt. Es werden demzufolge ein Verfahren und eine Vorrichtung zum Reinigen von Abwässern offenbart, die eine rasche Reinigung auch stark verschmutzter Abwässer ermöglichen. Hierbei ist vorgesehen, nach einer Vorklärung das Abwasser kontinuierlich durch ein Leitungssystem und geschlossene Filterbehälter zu leiten. In den geschlossenen Filterbehältern findet eine von der Atmosphäre isolierte biologische und mechanische Reinigung des Abwassers statt.

Aus der DE 195 12 965 A ist ein Bioreaktor zur biologischen Behandlung belasteter Abwässer bekannt, der einer mechanischen Reinigungsstufe nachgeordnet ist. Im Bioreaktor findet lediglich eine biologische Behandlung des Abwassers statt.

Aus der DE 35 34 163 A, der EP-A-1 088 793, der JP 04322794 A und der JP 2001070978 A sind rein biologisch arbeitende Abwasserreinigungsanlagen bekannt.

Der Erfindung liegt daher die Aufgabe zugrunde, ein Verfahren und eine Vorrichtung zur Behandlung von Flüssigkeiten, insbesondere zum Klären von Abwasser, zu schaffen, womit die Möglichkeit der wirksamen Kapazitätsvergrößerung bestehender Kläranlagen mit Nachklärbecken geschaffen wird.

Ein Verfahren zur Lösung dieser Aufgabe weist die Maßnahmen des Anspruchs 1 auf. Demnach wird im Anschluss an die Vorklärung, die sowohl mechanisch als auch biologisch erfolgen kann, eine mechanische Nachbehandlung der Flüssigkeit mit einer zusätzlichen biologischen Behandlung derselben von mit Biomasse besiedeltem Füllmaterial in mindestens einem Nachklärbecken vorgenommen. In der Nachklärphase findet demzufolge gleichzeitig eine mechanische und biologische Behandlung der vorgeklärten Flüssigkeit statt. Es hat sich überraschend gezeigt, dass eine deutliche Steigerung der Behandlungsleistung insbesondere einer Kläranlage erzielbar ist, wenn die mechanische Nachbehandlung mit einer biologischen Nachbehandlung kombiniert wird. Es kann dadurch die Leistung der Kläranlage deutlich vergrößert werden, ohne die Kläranlage vergrößern zu müssen.

Vorzugsweise wird die biologische Behandlung der Flüssigkeit nur bei der mechanischen Nachklärung vorgenommen, und zwar insbesondere in mindestens einem Nachklärbecken. Dadurch ist eine Leistungssteigerung der Kläranlage mit verhältnismäßig geringem Aufwand möglich, weil zur zusätzlichen biologischen Reinigung die zur mechanischen Nachklärung ohnehin benötigten und vorhandenen Nachklärbecken benutzt werden können.

Beim erfindungsgemäßen Verfahren wird das Füllmaterial schwimmend, und zwar vorzugsweise im ganz oder mindestens größtenteils eingetauchten Zustand in der zu behandelnden Flüssigkeit angeordnet. Das Füllmaterial befindet sich dazu direkt im jeweiligen Nachklärbecken. Zusätzlich können sich auch Füllkörper in Zuleitungen, Ableitungen bzw. Kanälen befinden. Dann werden die Nachklärbecken und ihre Zuleitungen, Ableitungen bzw. Kanäle mehrfach genutzt.

Als Füllmaterial wird vorzugsweise mindestens ein schwimmendes Festbett verwendet. Damit ist es möglich, ohne nennenswerten baulichen Zusatzaufwand die Leistung der Kläranlage deutlich zu vergrößern. Im einfachsten Falle reicht es aus, das zur Bildung des Füllmaterials dienende Festbett nur im jeweiligen Nachklärbecken anzuordnen. Das Festbett kann auch dadurch schwimmend gemacht sein, dass es an mindestens einem Schwimmer angehängt ist. Das eigentliche Festbett kann dann schwerer als das Abwasser sein. Das Füllmaterial bzw. Festbett kann ortsunveränderlich im Nachklärbecken angeordnet werden. Bei solchen Nachklärbecken, die einen bewegten Räumer aufweisen, kann es vorteilhaft sein, das Füllmaterial bzw. das Festbett am Räumer anzuordnen. Dadurch werden das Festbett bzw. das Füllmaterial vom sich durch die zu behandelnde Flüssigkeit hindurchbewegenden Räumer zwangsläufig mitbewegt, wodurch das Festbett und/oder das Füllmaterial kontinuierlich gespült werden und dadurch die im Wesentlichen volle Abbauleistung stets erhalten bleibt. Auch kann das Festbett frei schwimmend in mindestens einem Nachklärbecken angeordnet sein.

Gemäß einer bevorzugten Weiterbildung des Verfahrens kann die Eintauchtiefe des Füllmaterials im Nachklärbecken bedarfsweise verändert werden. Dies kann geschehen durch eine Veränderung des Auftriebs oder eines Ballasts des Füllmaterials. Es ist aber auch denkbar, das Füllmaterial in der Höhe zu einer dieses tragenden, schwimmenden Trageinrichtung zu verändern. Die unterschiedliche Eintauchtiefe des schwimmenden Füllmaterials in der zu behandelnden Flüssigkeit kann dazu genutzt werden, die biologische Abbauleistung dem Anfall zu klärender Flüssigkeit anzupassen, wodurch die Kläranlage sich in einfacher Weise an die bestehenden Bedürfnisse anpassen lässt.

Eine Vorrichtung zur Behandlung von Flüssigkeiten, insbesondere zum Klären von Abwasser, weist die Merkmale des Anspruchs 9 auf. Demnach sind mindestens in einem Nachklärbecken Besiedlungsflächen für Biomasse zur biologischen Reinigung der Flüssigkeit aufweisenden Füllmaterialien angeordnet. Zur Nachrüstung der Nachklärbecken können alle bisher bekannten Füllmaterialien vorzugsweise Festbetten und/oder Folienstreifen Verwendung finden. Dadurch ist es möglich, bei der üblicherweise mechanisch erfolgenden Nachklärung zusätzlich eine biologische Behandlung der Flüssigkeit durchzuführen, wobei das Füllmaterial einfach in dem ohnehin vorhandenen Nachklärbecken angeordnet werden kann. Dadurch kann die zusätzliche biologische Reinigung im Bereich der Nachklärung ohne nennenswerte bauliche Zusatzmaßnahmen erfolgen. Im einfachsten Falle ist nur das zusätzliche Füllmaterial erforderlich.

Zusätzlich ist es auch möglich, Festbetten in Kanälen oder Leitungen anzuordnen, die zum Nachklärbecken oder aus diesem herausführen. Dadurch kann die Flüssigkeit bereits während des Transports zum Nachklärbecken oder während des Abtransports aus dem Nachklärbecken zusätzlich biologisch gereinigt werden. Auch dies kann ohne einen nennenswerten zusätzlichen baulichen Aufwand erfolgen, weil die Verbindungskanäle bzw. Verbindungsleitungen ohnehin vorhanden sind.

Das Füllmaterial selbst kann bei entsprechender Anordnung und Ausbildung schwimmend in der zu behandelnden Flüssigkeit angeordnet werden. Dazu ist das Füllmaterial aus einem Material, vorzugsweise Kunststoffmaterial, gebildet, das es in einem ganz oder größerenteils in der zu behandelnden Flüssigkeit eingetauchten Zustand hält. Das Füllmaterial kann aber auch an Schwimmern oder dergleichen angehängt sein. Grundsätzlich ist es auch möglich, Füllkörper stehend auf dem Behälterboden bzw. der Sohle von Verbindungskanälen anzuordnen. Durch entsprechende Ausbildung des Festbetts kann erreicht werden, dass sich dieser über die gesamte Tiefe des Nachklärbeckens bzw. des Verbindungskanals erstreckt.

Vor allem strangförmige oder streifenförmige Füllmaterialien (nachfolgend werden beide kurz als "Folienstreifen" bezeichnet) werden üblicherweise an einer Trageinrichtung hängend in der zu behandelnden Flüssigkeit angeordnet. Die Streifen oder Stränge der Folienstreifen erstrecken sich dann senkrecht durch die Flüssigkeit. Die unteren Enden der Stränge bzw. Streifen sind dazu vorzugsweise gewichtsbelastet, damit die Stränge oder Streifen nicht aufschwimmen, während die oberen Enden der Stränge oder Streifen an einer Trageinrichtung befestigt sind, die an bzw. auf der Oberfläche der Flüssigkeit schwimmt. Alternativ können die Streifen oder Stränge der Folienstreifen auch aus einem Material mit einer Dichte gebildet werden, die größer als die Dichte des Abwassers ist, wodurch die Streifen oder Stränge aus Abwasser nicht aufschwimmen, ohne dass eine Gewichtsbelastung der unteren Enden der Streifen und/oder Stränge erforderlich ist. Die Erhöhung der Dichte der üblicherweise aus Kunststoff gebildeten Stränge oder Streifen der Folienstreifen erfolgt durch die Dichte erhöhende Füllstoffe oder zusätzliche Stränge aus einem Material mit einer höheren Dichte als der Kunststoff der Streifen bzw. Stränge. Die Eintauchtiefe der Stränge oder Streifen der Folienstreifen kann verändert werden durch eine entsprechende Einstellung des Auftriebs der Trageinrichtung. Dazu wird der Auftrieb der Trageinrichtung eingestellt durch die Veränderung des Volumens von Schwimmkörpern und/oder eine Veränderung des Ballasts der Trageinrichtung. Die genannten Maßnahmen lassen eine einfache und präzise Veränderung der Eintauchtiefe der Stränge bzw. Streifen in die zu behandelnde Flüssigkeit zu.

Als Füllmaterial für die Nachklärbecken können grundsätzlich alle bekannten Füllkörper zur Bildung von Aufwuchsflächen für biologischen Rasen in Betracht kommen. Besonders bevorzugt für die Erfindung sind jedoch Füllmaterialien aus Folienstreifen wie Kunststofffolienstreifen oder Kunststoffsträngen bzw. Kunststoffnetzrohren, die zu Füllkörperpaketen miteinander verbunden sind zur Anordnung in Verbindungskanälen oder -leitungen eignen sich jedoch nur Füllkörper, vorzugsweise Füllkörperpakete.

Bevorzugte Ausführungsbeispiele der Erfindung werden nachfolgend anhand der Zeichnung näher erläutert. In dieser zeigen:
- Fig. 1: eine Prinzipdarstellung einer Kläranlage,
- Fig. 2: eine Möglichkeit der Anordnung eines Füllmaterials aus Folienstreifen an einem Räumer eines Nachklärbeckens,
- Fig. 3: eine alternative Anordnung streifenförmigen Füllmaterials an einer Trageinrichtung der Nachklärbecken,
- Fig. 4: eine weitere alternative Anordnung des streifenförmigen Füllmaterials in einem Nachklärbecken,
- Fig. 5: eine Anordnung von Füllkörpern in einem Zuleitungsrohr zum Nachklärbecken, und
- Fig. 6: eine alternative Anordnung von Füllkörpern in einem Zuleitungsrohr des Nachklärbeckens.

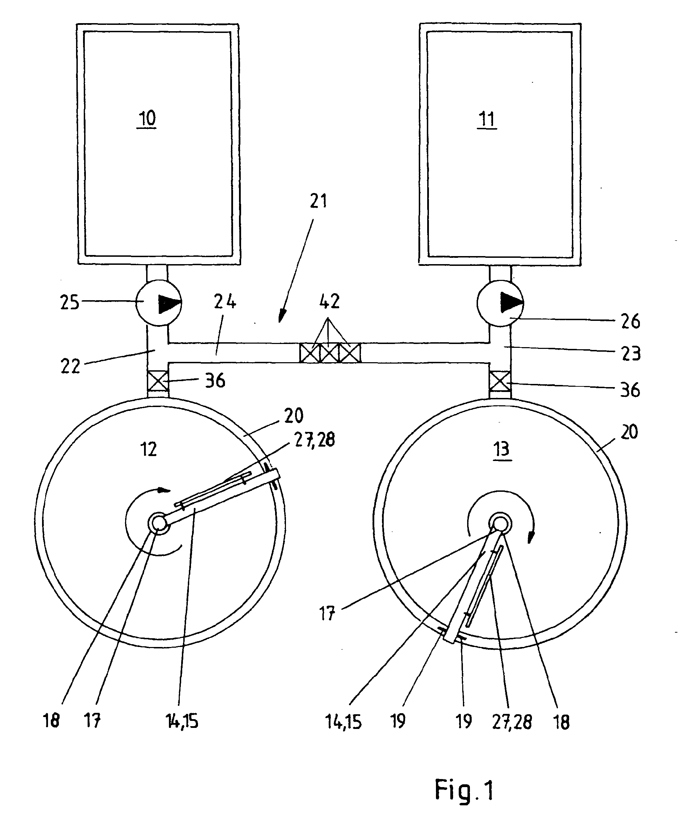

Die Fig. 1 zeigt schematisch eine Vorrichtung, bei der es sich um eine Kläranlage handelt. Anhand dieser Kläranlage soll auch das erfindungsgemäße Verfahren erläutert werden.

Die gezeigte Kläranlage verfügt über zwei Vorklärbecken 10 und 11 und zwei Nachklärbecken 12 und 13. Zwischen den Vorklärbecken 10 und 11 und den Nachklärbecken 12 und 13 können ein oder auch mehrere weitere Behandlungsstationen vorgesehen sein, beispielsweise Tropfkörper und Denitrifikationsstufen. Die Denitrifikationsstufen können auch hinter den Nachklärbecken 12 und 13 angeordnet sein. Aus Gründen der Vereinfachung sind in der Fig. 1 die Tropfkörper und die Denitrifikationsstufen nicht gezeigt.

Die Anzahl der Vorklärbecken 10 und 11 und der Nachklärbecken 12 und 13 kann vom hier gezeigten Ausführungsbeispiel sowohl nach oben als auch nach unten abweichen. Sie hängt von der Größe der Kläranlage ab. Die Vorklärbecken 10 und 11 und die Nachklärbecken 12 und 13 können beliebige Grundrisse aufweisen. Im gezeigten Ausführungsbeispiel sind nur beispielhaft die Vorklärbecken 10 und 11 als Rechteckbecken ausgebildet und die Nachklärbecken 12 und 13 als Rundbecken. Die Vorklärbecken 10 und 11 bilden eine erste mechanische Reinigungsstufe. Bei bekannten Kläranlagen der gezeigten Art erfolgt auch in den Nachklärbecken 12 und 13 eine mechanische Reinigung. Dazu verfügen die Nachklärbecken 12 und 13 unter anderem über jeweils einen Räumer 14. Der Räumer 14 verfügt über eine oberhalb des jeweiligen Nachklärbeckens 12 und 13 angeordnete Räumerbrücke 15, unter der ein an die zu behandelnde Flüssigkeit eintauchender Rechen 16 angeordnet ist. Bei den hier gezeigten runden Nachklärbecken 12 und 13 ist die Räumerbrücke 15 des Räumers 14 drehend antreibbar. Dazu ist ein inneres Ende der Räumerbrücke 15 an einem mittigen Drehpunkt 17 auf einem Mittelpunkt des im jeweiligen Nachklärbecken 12 und 13 angeordneten senkrechten Doms 18 drehbar gelagert. Das äußere Ende der Räumerbrücke 15 ist mit Laufrädern 19 auf einem kreisringförmigen Beckenrand 20 des Nachklärbeckens 12 und 13 entlangbewegbar.

Die in der Fig. 1 nicht gezeigten Tropfkörper und auch die Denitrifikationsstufe dienen zur biologischen Behandlung der Flüssigkeit.

Die Vorklärbecken 10 und 11 sind in der Darstellung der Fig. 1 mit den Nachklärbecken 12 und 13 durch Kanäle verbunden. Im gezeigten Ausführungsbeispiel handelt es sich hierbei um Verbindungsrohrleitungen 21 mit einem verhältnismäßig großen Durchmesser von üblicherweise mindestens 1 m. Die Verbindungsrohrleitung 21 verfügt im gezeigten Ausführungsbeispiel über jeweils eine direkte Rohrleitung 22 und 23 zwischen jeweils einem Vorklärbecken 10 bzw. 11 und dem nächstliegenden Nachklärbecken 12 bzw. 13. Darüber hinaus ist eine Überbrückungsrohrleitung 24 zwischen den direkten Rohrleitungen 22 und 23 vorgesehen. Des weiteren ist in jeder direkten Rohrleitung 22 und 23 im gezeigten Ausführungsbeispiel eine Pumpstation 25, 26 angeordnet. Die Verbindungsrohrleitung 21 kann in der Praxis einen vom gezeigten Ausführungsbeispiel abweichenden Verlauf aufweisen. Bei Kläranlagen mit Tropfkörpern und Denitrifikationsstufen ist die Verbindungsrohrleitung 21 so geführt, dass die Flüssigkeit von dem Vorklärbecken 10 und 11 zunächst zu den Tropfkörpern und gegebenenfalls auch zu der Denitrifikationsstufe gelangt und erst danach in die Nachklärbecken 12 und 13.

Die erfindungsgemäße Kläranlage (Vorrichtung) und das Verfahren zeichnen sich dadurch aus, dass in mindestens einem der Nachklärbecken 12 und 13 zusätzlich zur mechanischen Behandlung auch eine biologische Behandlung der Flüssigkeit erfolgt. Im gezeigten Ausführungsbeispiel ist eine biologische Zusatzbehandlung der Flüssigkeit in jedem der beiden Nachklärbecken 12 und 13 vorgesehen. Des weiteren ist eine zusätzliche biologische Behandlung der Flüssigkeit schon in der Verbindungsrohrleitung 21 vorgesehen. Normalerweise findet hier überhaupt keine Behandlung der Flüssigkeit statt. Es ist denkbar, eine zusätzliche biologische Behandlung der Flüssigkeit Verbindungsrohrleitung 21 in der durchzuführen. Auch kann die zusätzliche biologische Behandlung der Flüssigkeit nicht nur in der Verbindungsrohrleitung 21 vor den Nachklärbecken 12 und 13 erfolgen; vielmehr alternativ oder zusätzlich auch in Rohrleitungen, mit denen die behandelte Flüssigkeit aus den Nachklärbecken 12 und 13 abgeleitet wird. Des weiteren können an der Stelle der Rohrleitungen auch Kanäle beliebigen Querschnitts zwischen den Vorklärbecken 10 und 11 und den Nachklärbecken 12 und 13 und hinter den Nachklärbecken 12 und 13 vorgesehen sein, die zur zusätzlichen biologischen Behandlung der Flüssigkeit herangezogen werden.

Die zusätzliche biologische Behandlung in mindestens einem Nachklärbecken 12, 13 und/ggf in der Verbindungsrohrleitung 21 erfolgt durch Füllmaterialien, aus vorzugsweise Kunststoff, die Bewuchsflächen für Biomasse, insbesondere Mikroorganismen, aufweisen. Bevorzugt finden Füllkörper Verwendung, und zwar solche, die in der zu behandelnden Flüssigkeit nahezu vollständig eingetaucht sind. Das gilt auch für die Anordnung von Füllkörpern in der Verbindungsrohrleitung 21. In den Nachklärbecken 12 bzw. 13 kommt jedes übliche Füllmaterial aus mindestens größtenteils Kunststoff in Betracht. Dabei schwimmt das Füllmaterial in den Nachklärbecken 12, 13. Das Füllmaterial ist bevorzugt aus länglichen Folienstreifen oder aus miteinander verbundenen Netzrohren paketartig gebildete Füllkörper gebildet. Die Netzrohre der Füllkörperpakete bzw. die Folienstreifen sind mindestens größtenteils aus Kunststoff gebildet.

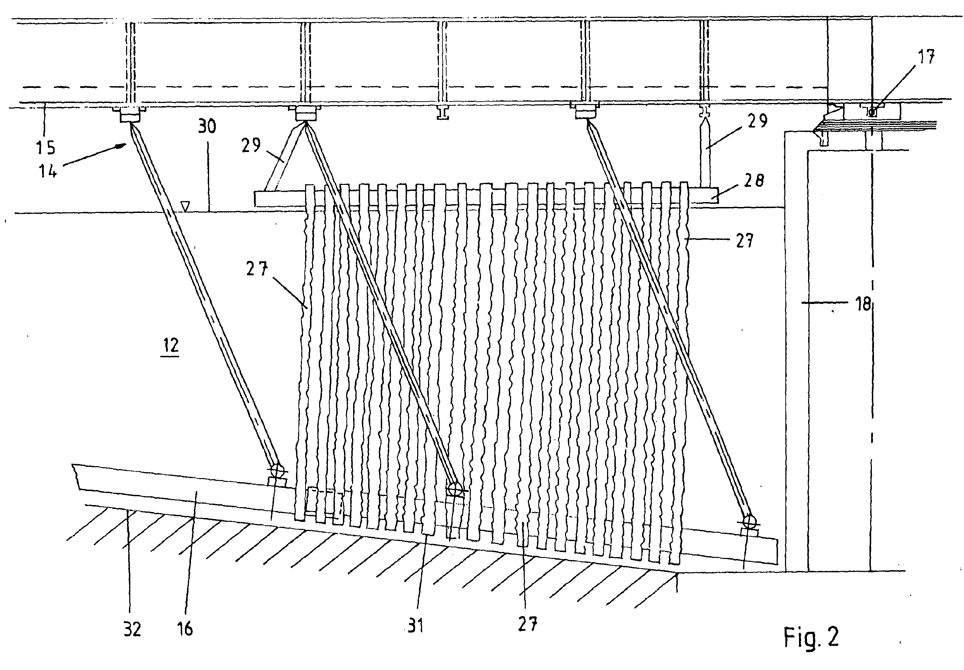

Die Fig. 2 zeigt eine Möglichkeit der schwimmenden Anordnung des Füllmaterials in einem Nachklärbecken 12. Genauso kann das Füllmaterial im Nachklärbecken 13 angeordnet sein. Im Ausführungsbeispiel der Fig. 2 dient eine Vielzahl von hängenden Folienstreifen 27 zur Bildung des Füllmaterials. Die Folienstreifen 27 sind in der Mitte über ein Tragrohr 28 zur Bildung einer Trageinrichtung gehängt. Die beiden Hälften eines jeden Folienstreifens 27 hängen dadurch zu gegenüberliegenden Seiten des Tragrohrs 28 senkrecht nach unten. Die einzelnen Folienstreifen 27 sind dicht aufeinanderfolgend auf das Tragrohr 28 gehängt zur Bildung eines Art Vorhangs. Das Tragrohr 28 ist horizontal ausgerichtet und mit vertikalen Verbindungsstreben 29 an der Unterseite der Räumerbrücke 15 befestigt, und zwar gegebenenfalls höhenverstellbar. Der Abstand des Tragrohrs 28 unterhalb der Räumerbrücke 15 ist dabei so gewählt, dass das Tragrohr 28 etwa auf dem Niveau des Flüssigkeitspegels 30 im Nachklärbecken 12 sich befindet. Dadurch sind die Folienstreifen 27 nahezu vollständig in der zu behandelnden Flüssigkeit im Nachklärbecken eingetaucht. Um sicherzustellen, dass die Folienstreifen 27 in der Flüssigkeit nicht aufschwimmen, können die frei herunterhängenden Enden der Folienstreifen 27 entsprechend beschwert sein oder die Folienstreifen 27 eine Dichte aufweisen, die größer als die Dichte der Flüssigkeit im Nachklärbecken 12 ist. Die Länge der Folienstreifen 27 ist so bemessen, dass ihre freien Enden 31 der senkrecht verlaufenden Folienstreifen sich bis zum Boden 32 des Nachklärbeckens 12 hin erstrecken, vorzugsweise kurz über dem Boden 32 enden.

Die Anordnung des aus Folienstreifen 27 gebildeten Füllmaterials an der Räumerbrücke 15 führt dazu, dass mit der drehend über dem Nachklärbecken 12 sich hinwegbewegenden Räumerbrücke 15 die daran befestigten Folienstreifen 27 mitbewegt werden. Demzufolge werden die Folienstreifen 27 mit den auf ihren Flächen angesiedelten biologischen Rasen, das heißt der vorzugsweise aus Mikrooganismen gebildeten Biomasse, kontinuierlich langsam durch die zu behandelnde Flüssigkeit bewegt. Dabei strömt an den Folienstreifen 27 des Füllmaterials die Flüssigkeit kontinuierlich entlang, wodurch ein Verkleben nebeneinanderliegender Folienstreifen 27 vermieden wird und Schlamm oder abgestorbene Biomasse von den Folienstreifen 27 entfernt wird.

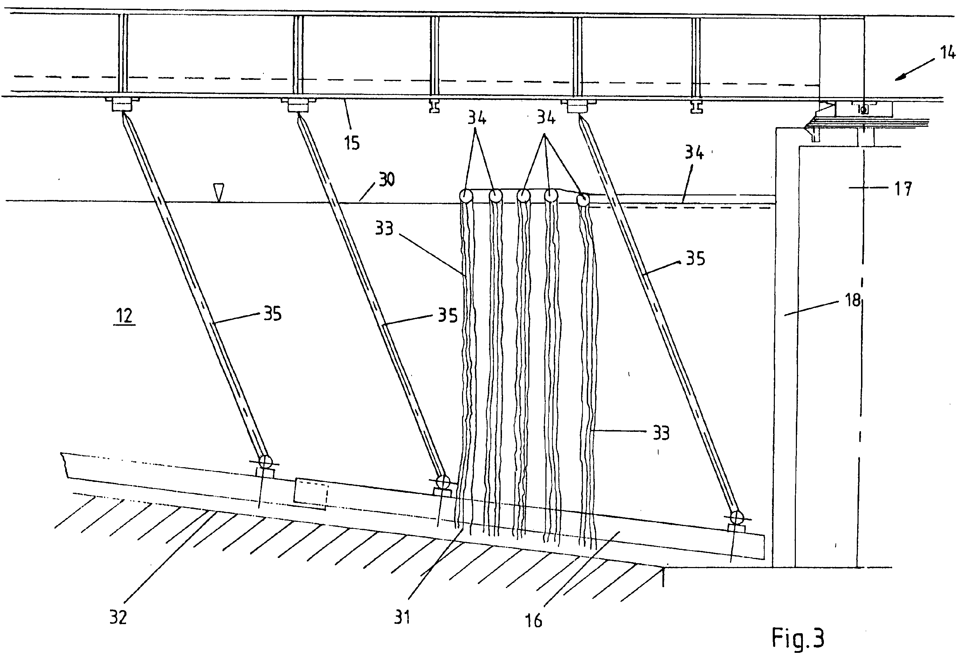

Die Fig. 3 zeigt ein Ausführungsbeispiel der Erfindung mit im Nachklärbecken 12 im Wesentlichen feststehend angeordnetem Füllmaterial. Auch dieses Füllmaterial ist aus Folienstreifen 33 gebildet. Eine Vielzahl vorzugsweise gleicher Folienstreifen 33 ist wiederum mittig über eine im gezeigten Ausführungsbeispiel aus fünf konzentrisch zueinander angeordneten Tragringen 34 gebildete Trageinrichtung gehängt, so dass die Hälfte jedes Folienstreifens 33 in parallelen senkrechten Ebenen liegend von gegenüber liegenden Seiten jedes Tragrings 34 herunterhängt. Die Tragringe 34 wiederum erstrecken sich konzentrisch um den mittigen Dom 18 zur Lagerung der Räumerbrücke 15. Die fünf Tragringe 34 weisen unterschiedliche Durchmesser auf, so dass zwischen zwei benachbarten Tragringen 34 unterschiedlicher Durchmesser ein Zwischenraum entsteht. Die Folienstreifen 27 sind dicht aufeinanderfolgend über den gesamten Umfang jedes Tragrings verteilt auf den Tragringen 34 aufgehängt. Es entstehen so insgesamt zehn voneinander beabstandete, kreisförmige Vorhänge aus den Folienstreifen 33.

Die Tragringe 34 sind vorzugsweise als wasserdichte Hohlkörper ausgebildet. Die Hohlräume in den Tragringen 34 sind so bemessen, dass die Tragringe an der Oberfläche der Flüssigkeit im Nachklärbecken 12 schwimmen. Erforderlichenfalls können den Tragringen zusätzliche Schwimmkörper oder auch Ballastkörper zugeordnet sein. Die Enden der Folienstreifen 33 sind wiederum beschwert oder die Folienstreifen 33 sind so ausgebildet, dass sie eine größere Dichte als die Flüssigkeit im Nachklärbecken 12 aufweisen, damit von den schwimmenden Tragringen 34 die Folienstreifen 33 senkrecht in der zu behandelnden Flüssigkeit herunterhängen.

Die Tragringe 34 sind mit den darauf hängenden Folienstreifen 33 frei schwimmend im Nachklärbecken 12 angeordnet. Damit der Abstand zwischen den einzelnen Tragringen 34 konstant bleibt, können alle fünf Tragringe an mehreren Stellen durch horizontal gerichtete Abstandshalter miteinander verbunden sein. Es ist aber auch denkbar, die Tragringe 34 an vorzugsweise mehreren Stellen mit dem Dom 18 zu verbinden. Dadurch ist sichergestellt, dass die Tragringe 34 stets ihre konzentrische Relativposition zum Dom 18 beibehalten. Im Falle der Verbindung der Tragringe 34 mit dem Dom 18 müssen die Haltestreben 35 für den Rechen 16 des Räumers 14 außerhalb des Bereichs der Tragringe 34 (abweichend von der Darstellung in der Fig. 3) angeordnet sein, damit die Haltestreben 35 nicht mit den Haltestreben der Tragringe 34 kollidieren.

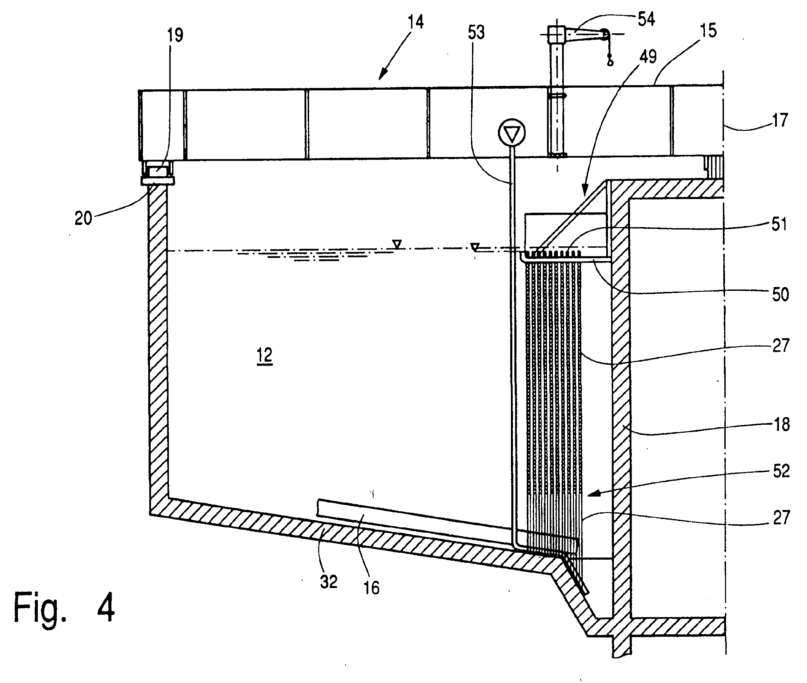

Beim in der Fig. 4 gezeigten Ausführungsbeispiel der Erfindung ist das Füllmaterial im Nachklärbecken 12 oder auch im Nachklärbecken 13 im Wesentlichen feststehend angeordnet. Das Füllmaterial ist im gezeigten Ausführungsbeispiel auch aus Folienstreifen 33 gebildet. Die Folienstreifen 33 erstrecken sich konzentrisch um den mittigen Dom 18 zur Lagerung der Räumerbrücke 15. Bei dieser Art der Anordnung dient das Füllmaterial zur Vergleichmäßigung der Ausströmgeschwindigkeit der Flüssigkeit und zur Vorabscheidung im Zentrumsbereich des Nachklärbeckens 12. Im konkreten Falle sind die Folienstreifen 33 an ein Traggerüst 49 angehängt, das das obere Ende des Doms 18 umgibt und hiermit fest verbunden ist. Eine horizontale untere Strebe 50 des Traggerüsts 49 taucht in die Flüssigkeit im Nachklärbecken 12 hinein. Auf den horizontalen, radial zur vertikalen Längsmittelachse des Doms 18 gerichteten Streben 50 des Traggerüsts 49 sind Balken 51 aus einem vorzugsweise nicht schwimmenden Material, insbesondere Bongossiholz, aufgelegt. Benachbarte Balken 51 werden so zueinander angeordnet, dass sie oberhalb der Streben 50 des Traggerüsts 49 eine Art Roste bilden, die gegebenenfalls begehbar sein kann.

Es kann ausreichend sein, wenn die Folienstreifen 33 nicht umlaufend um den gesamten Dom 18 herum angeordnet sind, sondern sich nur über einen Teil des Umfangs des Doms 18 erstrecken.

Auf die Balken 51 sind die Folienstreifen 33 mit einem mittigen Bereich U-förmig aufgehängt, so dass auf jeder Seite eines Balkens 51 nahezu die halbe Länge eines Folienstreifens 33 herunterhängt.

Die Folienstreifen 33 sind in der Länge so bemessen, dass sie sich bis zum Boden 32 des Nachklärbeckens 12 erstrecken. Vorzugsweise sind die Folienstreifen 33 in der Länge so bemessen, dass sie im frei von dem jeweiligen Balken 51 herunterhängenden Zustand den Boden 32 fast berühren.

Die Folienstreifen 33 sind in einer sich mit Abstand oberhalb des Bodens 32 befindlichen Ebene 52 miteinander verbunden, und zwar so, dass alle Folienstreifen 32 mit Abstand parallel zueinander verlaufen. Es ist auch denkbar, dass in der Ebene 52 die Folienstreifen 33 nicht nur miteinander verbunden sind, sondern auch heruntergedrückt werden. Die Folienstreifen 33 verlaufen dann von der Ebene des aus dem Balken 51 gebildeten Rosts am Traggerüst 49 bis zur darunterliegenden Ebene 22 gestreckt. Dadurch nehmen die Folienstreifen 33 eine vorgesehene, kontrollierte Lage ein.

Die Ebene 52, an der die Folienstreifen 33 unterhalb des Traggerüsts 49 miteinander verbunden sind, verläuft mit Abstand oberhalb des Bodens 32. Dieser Abstand ist so groß, dass der am Boden 32 des Nachklärbeckens 12 vom Räumer 14 entlangbewegte Rechen 16 unterhalb der Ebene 52 sich befindet und dadurch von dem starr gehaltenen oberen Bereich der Folienstreifen 33 nicht behindert wird. Da die Folienstreifen 33 von der Ebene 52 nach unten frei herunterhängen, kann der Rechen 16 an den Folienstreifen 33 des feststehenden Füllmaterials sich ungehindert entlangbewegen.

Im gezeigten Ausführungsbeispiel ist fest mit der Räumerbrücke 15 ein Spülrohr 53 verbunden. Das Spülrohr 53 ragt von der Räumerbrücke 15 zunächst mit einem senkrechten Abschnitt gerade nach unten, und zwar bis in den Bereich des Bodens 32 des Nachklärbeckens 12. Kurz vor dem Boden 32 ist der senkrechte Abschnitt des Spülrohrs 53 abgewinkelt in einen nahezu horizontalvehaufenden Abschnitt und einen sich daran anschließenden leicht schrägen Endabschnitt. Das Spülrohr 53 dient dazu, von oben Luft in das Nachklärbecken 12 einzuspeisen. Die Luft tritt im unteren horizontalen bzw. schrägen Bereich aus dem Spülrohr 53 aus. Dadurch wird die sich in der Nähe des Bodens 32 des Nachklärbeckens 12 befindliche Flüssigkeit mit Sauerstoff versorgt, und zwar belüftet. Gleichzeitig findet eine Verwirbelung des sich im Bereich des Bodens 32 absetzenden Schlamms statt. Das Spülrohr 53 läuft wie der Rechen 16 mit dem Räumer 14 kontinuierlich im Nachklärbecken 12 um. Dabei bewegt sich der untere Bereich des Spülrohrs 53 stets nahe am Boden 32 entlang. Gleichzeitig bewegt sich der untere Bereich des Spülrohrs 53 an den frei herunterhängenden beweglichen Enden der Folienstreifen 33 entlang. Diese freien Enden der Folienstreifen 33 werden somit vom Spülrohr 53 und insbesondere auch aus auf die Unterseite der Folienstreifen 33 gerichteten Druckluftaustrittsdüsen im unteren Bereich des Spülrohrs 53 austretende Druckluft hin- und herbewegt, wodurch überschüssiger biologischer Rasen auf insbesondere den nicht fixierten unteren Abschnitten der Folienstreifen 33 beseitigt, nämlich quasi "abgeklopft" wird.

Der Fig. 4 kann noch entnommen werden, dass die Räumerbrücke 15 im Bereich oberhalb des Traggerüsts 49 einen schwenkbaren Ausleger 54 aufweist. Dieser Ausleger 54 dient dazu, einzelne Balken 51 mit darauf hängenden Folienstreifen 33 aus dem Nachklärbecken 12 herauszuheben oder auch einzusetzen. Der Ausleger 54 bildet dabei eine Art Kran zur einfacheren Wartung, Montage und Demontage des Füllmaterials.

Gemäß einer nicht gezeigten Abwandlung der Ausführungsform der Fig. 4 erfolgt keine Verbindung der Folienstreifen 33 im Bereich der Ebene 52. Die zur Verbindung der Folienstreifen 33 dienende Halteeinrichtung kann bei dieser Abwandlung zum Wegfall kommen. Statt dessen werden alle Folienstreifen 33 oder Gruppen mehrerer Folienstreifen außen von einem Umfassungsseil verbunden, das die Folienstreifen 33 oder Gruppen derselben bündelt und auch dadurch zusammenhält. Im einfachsten Falle reicht ein einziges Umfassungsseil etwa im Bereich der Ebene 52 der Fig. 4. Durchaus können darüber in bestimmten Abständen weitere Umfassungsseile vorgesehen sein. Der unter der Ebene 52 (Fig. 4) liegende Bereich der Folienstreifen 33 ist auch hier unfixiert, also mit keinen Umfassungsseilen versehen.

Es ist auch denkbar, im Nachklärbecken 12 und/oder 13 Füllkörper, insbesondere Füllkörperpakete, aus miteinander verbundenen Netzrohrabschnitten zur zusätzlichen biologischen Behandlung der Flüssigkeit vorzusehen. Dazu wird im einfachsten Falle mindestens ein Füllkörperpaket lose schwimmend in der Flüssigkeit angeordnet. Das jeweilige Füllkörperpaket ist derart ausgebildet, insbesondere je nach Bedarf beschwert oder mit Auftriebsmitteln versehen, dass es nahezu vollständig eingetaucht in der Flüssigkeit schwimmt. Im Idealfall schließt die obere Fläche des jeweiligen Füllkörperpakets etwa bündig mit der Oberfläche der Flüssigkeit (Flüssigkeitspegel 30) im Nachklärbecken 12 und/oder 13 ab. Die schwimmenden Füllkörperpakete passen sich bei der beschriebenen Anordnung in der Flüssigkeit automatisch an sich ändernde Flüssigkeitspegel 30 an. Es ist aber auch durchaus denkbar, die Füllkörperpakete wie die Folienstreifen 27 mit der Räumerbrücke 15 oder anderen Teilen des Räumers 14 zu verbinden, damit sich die Füllkörperblöcke kontrolliert, nämlich angetrieben vom Räumer 14, in der Flüssigkeit bewegen.

In der Fig. 1 ist schematisch eine denkbare Anordnung von Füllkörpern zur biologischen Behandlung der Flüssigkeit in der Verbindungsrohrleitung 21 angedeutet, und zwar durch symbolisch dargestellte Füllkörperpakete 36. Demnach ist jeweils ein Füllkörperpaket 36 in der direkten Rohrleitung 22 und 23 angeordnet, während in der Überbrückungsrohrleitung 24 drei aufeinanderfolgende Füllkörperpakete 36 sich befinden. Auf diese Weise kann die Intensität der zusätzlichen biologischen Behandlung gesteuert werden, indem beim direkten Umpumpen der Flüssigkeit vom Vorklärbecken 10 zum Nachklärbecken 12 über die direkte Rohrleitung 22 die Flüssigkeit nur ein Füllkörperpaket 36 zu passieren hat. Soll eine umfänglichere biologische Behandlung durchgeführt werden, erfolgt ein Umpumpen der Flüssigkeit aus dem Vorklärbecken 10 zum Nachklärbecken 13. Die Flüssigkeit muss dann zusätzlich die Überbrückungsrohrleitung 24 passieren, wodurch sie an insgesamt vier Füllkörperpaketen 36 vorbeiströmen muss, um in das Nachklärbecken 13 zu gelangen. Abweichend von der in der Fig. 1 gezeigten möglichen Anordnung der Füllkörperpakete 36 in der Verbindungsrohrleitung 21 sind beliebige alternative Ausgestaltungen von Füllkörpern denkbar, und zwar vor allem bei anders gestalteten Verbindungsrohrleitungen.

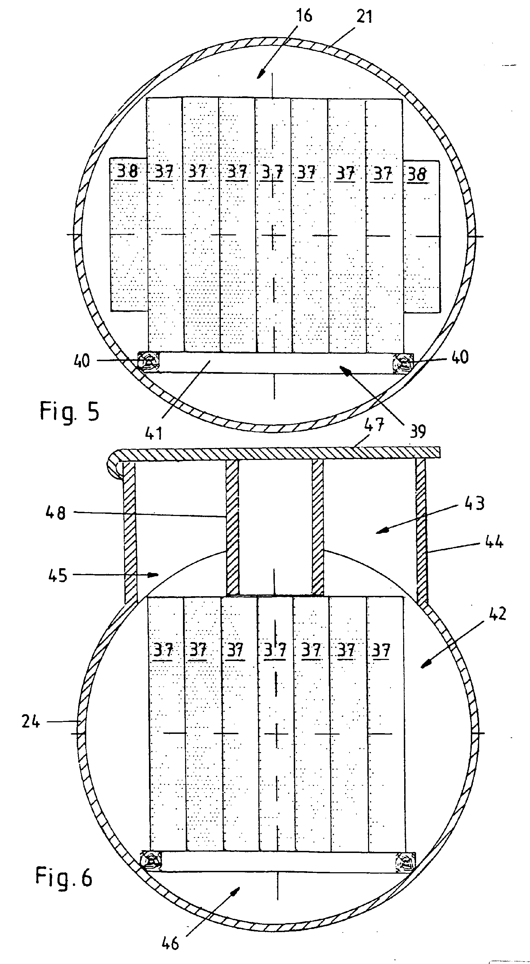

Die Fig. 5 zeigt eine mögliche Anordnung eines Füllkörperpakets 36 in der Verbindungsrohrleitung 21, und zwar hier in der direkten Rohrleitung 22 bzw. 23. Demnach sind die Netzrohrabschnitte zur Bildung des Füllkörperpakets 36 derart bemessen und nebeneinander angeordnet, dass sie den Querschnitt der Verbindungsrohrleitung 21 möglichst vollständig ausfüllen. Im gezeigten Ausführungsbeispiel ist das Füllkörperpaket 36 größtenteils rechteckförmig ausgebildet durch Verbindung gleichlanger Netzrohrabschnitte 37. Außenliegenden Netzrohrabschnitten 37 sind im gezeigten Ausführungsbeispiel kürzere Netzrohrabschnitte 38 zugeordnet. Diese ragen gegenüber der oberen und der unteren Ebene des Füllkörperpakets 36 zurück. Dadurch erhält das Füllkörperpaket 36 eine an den runden Querschnitt der Verbindungsrohrleitung 21 größtenteils angepaßte Querschnittsfläche, so dass nahezu die gesamte durch die Verbindungsrohrleitung 21 hindurchströmende Flüssigkeit das Füllkörperpaket 36 durchströmen muss und dabei zwangsläufig in der Verbindungsrohrleitung 21 biologisch gereinigt wird.

Das Füllkörperpaket 36 ruht in der Verbindungsrohrleitung 21 auf einem Traggerüst 39. Das Traggerüst 39 ist im gezeigten Ausführungsbeispiel aus zwei in Längsrichtung der Verbindungsrohrleitung 21 verlaufenden Längsbalken 40 gebildet, die in regelmäßigen Abständen durch Querbalken verbunden und auf Abstand gehalten sind. Das Traggerüst 39 ist dadurch nach Art einer Leiter ausgebildet. Das vorzugsweise aus Holz gebildete Traggerüst 39 erstreckt sich ausgehend vom Nachklärbecken 12 bzw. 13 bis zu derjenigen Stelle der direkten Rohrleitung 22 oder 23, an der das Füllkörperpaket 36 positioniert werden soll. Es ist durchaus denkbar, das Traggerüst 39 durch die ganze Länge der direkten Rohrleitung 22 und 23 hindurchzuführen. Das Traggerüst 39 bildet in den direkten Rohrleitungen 22 und 23 eine Schiebeebene bzw. Schienen, worauf das jeweilige Füllkörperpaket 36 entlanggeschoben wird, um es an der vorgesehenen Position in der direkten Rohrleitung 22 und 23 zu positionieren. Auf diese Weise kann das Füllkörperpaket 36 in die Rohrleitungen 22 bzw. 23 eingeschoben werden durch Öffnungen an der Mündung der Rohrleitung 22 bzw. 23 im Nachklärbecken 12, 13 oder auch von Vorklärbecken 10 bzw. 11 aus.

Die Fig. 6 zeigt einen Querschnitt durch die Überbrückungsrohrleitung 24 und eines der sich darin befindenden Füllkörperpaketen 42. Da die Uberbrückungsrohrleitung 24 von den Stirnseiten nur schwer zugänglich ist, wird hier vorgesehen, das jeweilige Füllkörperpaket 42 durch eine Öffnung 43 von oben in die Überbrückungsrohrleitung 24 einzusetzen. Bei einem würfelförmigen Füllkörperpaket 42 ist die Öffnung 43 gebildet durch einen korrespondierenden, viereckigen Schacht 44, der einen korrespondierenden Ausschnitt in der Oberseite der Rohrwandung der Überbrückungsrohrleitung 24 umgibt und mit der Rohrwandung dicht verbunden ist. Die lichten Abmessungen des Schachts 44 sind etwas größer als die Grundfläche des Füllkörperpakets 42, so dass ein jeweiliges Füllkörperpaket 42 durch die Öffnung 43 und den Schacht 44 von oben in die Überbrückungsrohrleitung 24 eingesetzt werden kann. Als Unterlagen für das jeweilige Füllkörperpaket 42 dient hier ein Traggerüst 46, das dem Traggerüst 39 des Ausführungsbeispiels der Fig. 4 entspricht. Die obere Öffnung 43 des Schachts 44 ist vorzugsweise flüssigkeitsdicht verschlossen durch einen Deckel 47. Unter dem Deckel 47 ist beim hier gezeigten Ausführungsbeispiel ein Distanzhalter 48 angeordnet. Es handelt es sich hierbei um ein unter dem Deckel 47 befestigtes Rohr, dessen Länge auf die Höhe des Füllkörperpakets 42 in der Überbrückungsrohrleitung 24 derart abgestimmt ist, dass bei geschlossenem Deckel 47 eine Unterseite des Distanzhalters 48 mit geringem Abstand über der Oberseite des Füllkörperpakets 42 endet und dadurch das Füllkörperpaket 42 im Bereich der Öffnung 43 in der Überbrückungsrohrleitung 24 gegen Aufschwimmen sichert.

Sofern zwischen den Vorklärbecken 10 und 11 und den Nachklärbecken 12 und 13 an der Stelle der Verbindungsrohrleitungen 21 Verbindungskanäle angeordnet sind, können auch darin Füllkörper zur biologischen Behandlung der Flüssigkeiten nach dem in den Fig. 4 und 5 im Zusammenhang mit Verbindungsrohrleitungen 21 gezeigten Prinzip angeordnet sein. Bei Verbindungskanälen mit einem quadratischen oder rechteckigen Querschnitt kann dieser durch entsprechende Gestaltung der Füllkörperpakete auf einfache Weise ganz ausgefüllt werden. Bei Verbindungskanälen mit ebenem Boden kann ein Traggerüst unter den Füllkörperpaketen entfallen. Bei oben offenen Verbindungskanälen können die Füllkörperpakete in diese ohne weiteres an beliebigen Stellen eingesetzt werden. Bei abgedeckten Verbindungskanälen lassen sich diese zum Einsetzen und Herausnehmen von Füllkörperpaketen zugänglich machen durch bereichsweises Entfernen oder Hochklappen der Abdeckung.

### Bezugszeichenliste

- 10: Vorklärbecken
- 11: Vorklärbecken
- 12: Nachklärbecken
- 13: Nachklärbecken
- 14: Räumer
- 15: Räumerbrücke
- 16: Rechen
- 17: mittiger Drehpunkt
- 18: Dom
- 19: Laufrad
- 20: Beckenrand
- 21: Verbindungsrohrleitung
- 22: direkte Rohrleitung
- 23: direkte Rohrleitung
- 24: Überbrückungsrohrleitung
- 25: Pumpstation
- 26: Pumpstation
- 27: Folienstreifen
- 28: Tragrohr
- 29: Verbindungsstrebe
- 30: Flüssigkeitspegel
- 31: freies Ende
- 32: Boden
- 33: Folienstreifen
- 34: Tragring
- 35: Haltestrebe
- 36: Füllkörperpaket
- 37: Netzrohrabschnitt
- 38: kurzer Netzrohrabschnitt
- 39: Traggerüst
- 40: Längsbalken
- 41: Querbalken
- 42: Füllkörperpaket
- 43: Öffnung
- 44: Schacht
- 45: Ausschnitt
- 46: Traggerüst
- 47: Deckel
- 48: Distanzhalter
- 49: Traggerüst
- 50: Strebe
- 51: Balken
- 52: Ebene
- 53: Spülrohr
- 54: Ausleger

## Patentansprüche

1. Verfahren zur Behandlung von Flüssigkeiten, insbesondere zum Klären von Abwasser, wobei mindestens eine Vorklärung und eine Nachklärung erfolgen, **dadurch gekennzeichnet, dass** die Nachklärung in mindestens einem Nachklärbecken (12, 13) erfolgt, und bei der Nachklärung eine mechanische Behandlung und gleichzeitig eine zusätzliche biologische Behandlung der Flüssigkeiten mit durch Biomasse besiedeltem Füllmaterial vorgenommen wird.

2. Verfahren nach Anspruch 1, **dadurch gekennzeichnet dass** das Füllmaterial schwimmend, vorzugsweise im ganz oder mindestens größtenteils eingetauchtem Zustand, in den zu behandelnden Flüssigkeiten in den Nachklärbecken angeordnet wird.

3. Verfahren nach Anspruch 1, **dadurch gekennzeichnet, dass** das Füllmaterial kontrolliert und/oder unkontrolliert durch die im Nachklärbecken (12, 13) zu behandelnden Flüssigkeiten bewegt wird, insbesondere mittels einer im Nachklärbecken (12, 13) sich bewegenden Einrichtung, wie zum Beispiel einem Räumer (14).

4. Verfahren nach Anspruch 1, **dadurch gekennzeichnet, dass** die Eintauchtiefe des schwimmenden Füllmaterials in den Flüssigkeiten der Nachklärbecken (12, 13) verändert wird, vorzugsweise durch eine Veränderung des Auftriebs des Füllmaterials in den Flüssigkeiten und/oder die Belastung des Füllmaterials mit Ballast.

5. Verfahren nach einem der vorhergehenden Ansprüche, **dadurch gekennzeichnet, dass** bei streifen- oder strangförmigem Füllmaterial aus Folienstreifen (27, 33) die Enden der Folienstreifen (27, 33) gewichtsbelastet werden.

6. Verfahren nach einem der vorhergehenden Ansprüche, **dadurch gekennzeichnet, dass** als Füllmaterial mindestens ein schwimmendes Festbett verwendet wird.

7. Verfahren nach Anspruch 1, **dadurch gekennzeichnet, dass** das Füllmaterial bzw. Festbett im Wesentlichen ortsunveränderlich im Nachklärbecken (12, 13) angeordnet wird.

8. Verfahren nach einem der vorhergehenden Ansprüche, **dadurch gekennzeichnet, dass** eine weitere zusätzliche biologische Behandlung mindestens beim Transport der Flüssigkeiten zum Nachklärbecken (12, 13) vorgenommen wird.

9. Vorrichtung zur Behandlung von Flüssigkeiten, insbesondere zum Klären von Abwasser, mit mindestens einem Vorklärbecken, mindestens einem Nachklärbecken sowie Verbindungskanälen und/oder -leitungen zwischen den Becken, **dadurch gekennzeichnet, dass** mindestens in einem zur mechanischen Klärung dienenden Nachklärbecken (12, 13) Besiedlungsflächen für Biomasse aufweisendes Füllmaterial zur gleichzeitigen, zusätzlichen biologischen Reinigung der Flüssigkeit angeordnet sind.

10. Vorrichtung nach Anspruch 9, **dadurch gekennzeichnet ,dass** das Füllmaterial schwimmend in der Flüssigkeit der Nachklärbecken (12, 13) angeordnet ist.

11. Vorrichtung nach Anspruch 9, **dadurch gekennzeichnet, dass** das Füllmaterial im Nachklärbecken (12, 13) an einer Trageeinrichtung hängend angeordnet ist.

12. Vorrichtung nach Anspruch 11, **dadurch gekennzeichnet, dass** die Trageeinrichtung auf der Flüssigkeit in mindestens einem Nachklärbecken (12, 13) schwimmt.

13. Vorrichtung nach Anspruch 11, **dadurch gekennzeichnet, dass** die Trageeinrichtung mindestens einen Schwimmkörper aufweist, der vorzugsweise integraler Bestandteil der Trageeinrichtung ist.

14. Vorrichtung nach einem der Ansprüche 11 bis 13, **dadurch gekennzeichnet, dass** der Auftrieb mindestens eines Schwimmkörpers bzw. der Trageeinrichtung veränderbar ist.

15. Vorrichtung nach Anspruch 11, **dadurch gekennzeichnet, dass** die Trageeinrichtung höhenverstellbar an einer Einrichtung des Nachklärbeckens, (12, 13), insbesondere einer Räumerbrücke (15), angeordnet ist.

16. Vorrichtung nach Anspruch 9, **dadurch gekennzeichnet, dass** das Füllmaterial an einer bewegbaren Einrichtung des Nachklärbeckens (12, 13), insbesondere einem Räumer (14) befestigt ist.

17. Vorrichtung nach einem der vorhergehenden Ansprüche, **dadurch gekennzeichnet, dass** das Füllmaterial Füllkörper, insbesondere Füllkörperpakete (36, 42), und/oder flexible Streifen, insbesondere Folienstreifen (27, 33), sind.

18. Vorrichtung nach Anspruch 17, **dadurch gekennzeichnet, dass** die Füllkörper, insbesondere Füllkörperpakete, frei schwimmend in der Flüssigkeit in mindestens einem Nachklärbecken (12, 13) angeordnet sind.

## Claims

1. Method for the treatment of liquids, in particular for clarifying waste water, with at least one primary clarification and one secondary clarification taking place, **characterized in that** the secondary clarification takes place in at least one secondary clarifier (12, 13), and, during the secondary clarification, a mechanical treatment and, at the same time, an additional biological treatment of the liquids using packing material colonized by biomass take place.

2. Method according to Claim 1, **characterized in that** the packing material is arranged floating, preferably totally or at least for the most part immersed, in the liquids to be treated in the secondary clarifiers.

3. Method according to Claim 1, **characterized in that** the packing material is moved in a controlled and/or uncontrolled manner through the liquids to be treated in the secondary clarifier (12, 13), in particular by means of a device moving in the secondary clarifier (12, 13), such as, for example, a scraper (14).

4. Method according to Claim 1, **characterized in that** the immersion depth of the floating packing material in the liquids of the secondary clarifiers (12, 13) is altered, preferably by altering the buoyancy of the packing material in the liquids and/or loading the packing material with ballast.

5. Method according to any one of the preceding claims, **characterized in that,** in the case of strip-shaped or strand-shaped packing material made of film strips (27, 33), the ends of the film strips (27, 33) are weight-loaded.

6. Method according to any one of the preceding claims, **characterized in that** at least one floating fixed bed is used as packing material.

7. Method according to Claim 1, **characterized in that** the packing material or, alternatively, the fixed bed is arranged in a substantially fixed position in the secondary clarifier (12, 13).

8. Method according to any one of the preceding claims, **characterized in that** a further additional biological treatment is carried out at least during the transport of the liquids to the secondary clarifier (12, 13).

9. Device for the treatment of liquids, in particular for clarifying waste water, comprising at least one primary clarifier, at least one secondary clarifier as well as connecting channels and/or connecting lines between the tanks, **characterized in that** at least in one clarifier (12, 13) used for mechanical clarification there are arranged colonization surfaces for packing material having biomass for simultaneous, additional biological purification of the liquid.

10. Device according to Claim 9, **characterized in that** the packing material is arranged floating in the liquid of the secondary clarifiers (12, 13).

11. Device according to Claim 9, **characterized in that** the packing material in the secondary clarifier (12, 13) is arranged hanging from a carrying device.

12. Device according to Claim 11, **characterized in that** the carrying device floats on the liquid in at least one secondary clarifier (12, 13).

13. Device according to Claim 11, **characterized in that** the carrying device comprises at least one floating body, which is preferably an integral component of the carrying device.

14. Device according to any one of Claims 11 to 13, **characterized in that** the buoyancy of at least one floating body or of the carrying device, as the case may be, is alterable.

15. Device according to Claim 11, **characterized in that** the carrying device is arranged in a height-adjustable manner on a device of the secondary clarifier (12, 13), in particular a scraping bridge (15).

16. Device according to Claim 9, **characterized in that** the packing material is fixed to a movable device of the secondary clarifier (12, 13), in particular a scraper (14).

17. Device according to any one of the preceding claims, **characterized in that** the packing material is packing bodies, in particular sets of packing bodies (36, 42) and/or flexible strips, in particular film strips (27, 33).

18. Device according to Claim 17, **characterized in that** the packing bodies, in particular sets of packing bodies, are arranged freely floating in the liquid in at least one secondary clarifier (12, 13).

## Revendications

1. Procédé de traitement de liquides, en particulier d'épuration d'eaux usées, dans lequel on effectue au moins une pré-épuration et une épuration finale,
**caractérisé en ce que**
l'épuration finale s'effectue dans au moins un bassin (12, 13) d'épuration finale, et **en ce que** lors de l'épuration finale, on y réalise un traitement mécanique et simultanément un traitement biologique supplémentaire des liquides par un matériau de garnissage colonisé par de la biomasse.

2. Procédé selon la revendication 1, **caractérisé en ce que** le matériau de garnissage flotte dans les bassins d'épuration finale et est de préférence totalement immergé ou au moins en majeure partie immergé dans les liquides à traiter.

3. Procédé selon la revendication 1, **caractérisé en ce que** le matériau de garnissage est déplacé de manière contrôlée et/ou non contrôlée par les liquides à traiter dans le bassin (12, 13) d'épuration finale, en particulier au moyen d'un dispositif qui se déplace dans le bassin (12, 13) d'épuration finale, par exemple un dispositif de brassage (14).

4. Procédé selon la revendication 1, **caractérisé en ce que** la profondeur d'immersion du matériau de garnissage flottant dans les liquides des bassins (12, 13) d'épuration finale est modifiée de préférence en modifiant la force ascensionnelle du matériau de garnissage présent dans les liquides et/ou en chargeant le matériau de garnissage d'un ballast.

5. Procédé selon l'une des revendications précédentes, **caractérisé en ce que** lorsque le matériau de garnissage présente la forme de rubans ou de barreaux en rubans de feuille (27, 33), les extrémités des rubans de feuille (27, 33) sont lestées.

6. Procédé selon l'une des revendications précédentes, **caractérisé en ce que** comme matériau de garnissage, on utilise au moins un lit fixe flottant.

7. Procédé selon la revendication 1, **caractérisé en ce que** le matériau de garnissage ou le lit fixe sont disposés en position essentiellement immobile dans le bassin (12, 13) d'épuration finale.

8. Procédé selon l'une des revendications précédentes, **caractérisé en ce qu'**un autre traitement biologique supplémentaire est réalisé au moins lors du transport des liquides vers le bassin d'épuration finale (12, 13).

9. Dispositif de traitement de liquides, en particulier d'épuration d'eaux usées, qui présente au moins un bassin de pré-épuration, au moins un bassin d'épuration finale ainsi que des canaux et/ou conduits qui relient les bassins,
**caractérisé en ce que**
au moins dans un bassin (12, 13) d'épuration finale qui sert à l'épuration mécanique, des surfaces de colonisation pour un matériau de garnissage qui présente de la biomasse sont disposées pour assurer en même temps une épuration biologique supplémentaire du liquide.

10. Dispositif selon la revendication 9, **caractérisé en ce que** le matériau de garnissage flotte dans le liquide des bassins d'épuration finale (12, 13).

11. Dispositif selon la revendication 9, **caractérisé en ce que** le matériau de garnissage est suspendu à un dispositif de support dans le bassin d'épuration finale (12, 13).

12. Dispositif selon la revendication 11, **caractérisé en ce que** le dispositif de support flotte sur le liquide d'au moins un bassin (12, 13) d'épuration finale.

13. Dispositif selon la revendication 11, **caractérisé en ce que** le dispositif de support présente au moins un flotteur qui fait de préférence partie intégrante du dispositif de support.

14. Dispositif selon l'une des revendications 11 à 13, **caractérisé en ce que** la force ascensionnelle d'au moins un flotteur ou du dispositif de support peut être modifiée.

15. Dispositif selon la revendication 11, **caractérisé en ce que** le dispositif de support est disposé de manière ajustable en hauteur sur un composant du bassin (12, 13) d'épuration finale, en particulier sur une passerelle (15) du dispositif de brassage.

16. Dispositif selon la revendication 9, **caractérisé en ce que** le matériau de garnissage est fixé sur un composant mobile du bassin (12, 13) d'épuration finale, et en particulier sur un dispositif de brassage (14).

17. Dispositif selon l'une des revendications précédentes, **caractérisé en ce que** le matériau de garnissage est constitué de corps de garnissage, en particulier de paquets (36, 42) de corps de garnissage et/ou de rubans flexibles et en particulier de rubans de feuille (27, 33).

18. Dispositif selon la revendication 17, **caractérise en ce que** les corps de garnissage et en particulier les paquets de corps de garnissage flottent librement dans le liquide d'au moins un bassin (12, 13) d'épuration finale.
